# FASCICULE DE BREVET EUROPEEN

(11) **EP 3 751 291 B1**
(45) Date de publication et mention de la délivrance du brevet: **05.04.2023**
(21) Numéro de dépôt: 20179026.8
(22) Date de dépôt: 09.06.2020
(51) Int. Cl.: G01P 3/488, B60T 8/171, B60T 8/17, G01P 1/02

(54) **ENSEMBLE DE ROUE ET FREIN D'AERONEF**
ANORDNUNG AUS RAD UND BREMSE EINES LUFTFAHRZEUGS
WHEEL AND BRAKE ASSEMBLY FOR AN AIRCRAFT

(30) Priorité: 13.06.2019 FR 1906336
(43) Date de publication de la demande: 16.12.2020
(73) Titulaire: Safran Landing Systems, 78140 Vélizy-Villacoublay (FR)
(72) Inventeur: ZABULON, Joël, 77550 Moissy-Cramayel (FR); FRANK, David, 77550 Moissy-Cramayel (FR); GALLERAND, Xavier, 77550 Moissy-Cramayel (FR)
(74) Mandataire: Lavaud, Thomas

(56) Documents cités:
- US-A- 3 469 662
- US-A1- 2003 083 797
- US-A1- 2009 278 401

## Description

L'invention concerne le domaine de la mesure de vitesse de rotation des roues freinées d'aéronef.

### ARRIERE PLAN DE L'INVENTION

Un système de freinage des roues d'un aéronef comprend une pluralité de freins qui équipent chacun une roue dite « freinée » de l'aéronef. Le système de freinage met classiquement en oeuvre une fonction d'antipatinage des roues freinées.

La mesure de la vitesse de rotation des roues freinées lorsque l'aéronef est au sol est un élément-clé de la fonction d'antipatinage.

Outre le frein, chaque roue freinée est équipée d'un dispositif de mesure instantanée de sa vitesse de rotation afin de détecter les départs au blocage : le « tachymètre ». Traditionnellement, un tachymètre d'une roue d'aéronef utilise une technologie magnétique passive, comme la reluctance variable par exemple. Le tachymètre génère un signal électrique de mesure ayant pour fréquence la fréquence de rotation de la roue ou un multiple de la fréquence de rotation de la roue.

Le tachymètre est installé au niveau de l'axe de rotation de la roue, généralement dans l'essieu ou dans le capot de roue. Un composant sensible (ou cellule sensible) du tachymètre repère soit la position angulaire soit une variation de la position angulaire d'une cible solidaire en rotation de la roue.

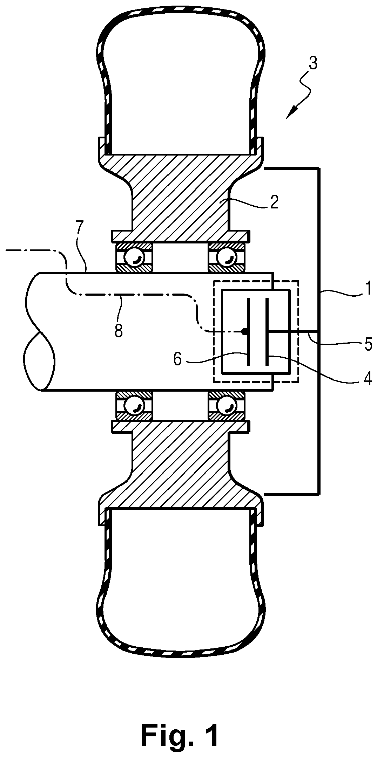

Ainsi, en référence à la figure 1, une première solution connue consiste à utiliser un capot de roue 1 fixé à la jante 2 de la roue 3 et tournant avec la roue 3 pour entraîner une cible 4 grâce à un dispositif d'entraînement 5. La position angulaire ou la vitesse de rotation de la roue 3 est acquise par le composant sensible 6 qui est fixe et qui est positionné à l'intérieur de l'essieu 7 à proximité de la cible 4. Le composant sensible 6 est relié par un câble 8 au système de freinage et transmet à celui-ci le signal électrique de mesure (analogique ou numérique).

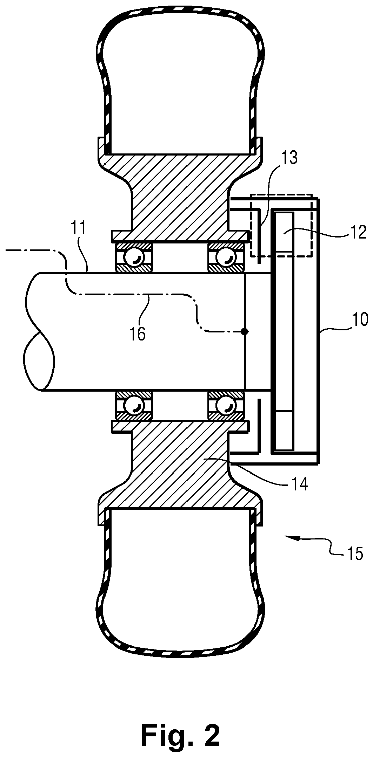

En référence à la figure 2, une deuxième solution connue consiste à utiliser un capot de roue 10 qui est cette fois solidaire de l'essieu 11, et donc fixe, et d'intégrer dans le capot de roue 10 le composant sensible 12. La cible 13 est solidaire de la jante 14 de la roue 15 et est positionnée entre la jante 14 et le composant sensible 12. Le composant sensible 12 est relié par un câble 16 au système de freinage. Ces solutions sont relativement robustes et efficaces, mais présentent tout de même certains inconvénients.

La sensibilité à basse vitesse des tachymètres à reluctance variable est relativement mauvaise, car les signaux électriques de mesure produits par ces tachymètres à reluctance variable sont trop faibles à basse vitesse pour être fiables.

On a donc envisagé d'utiliser des capteurs actifs, par exemple des capteurs à effet Hall. Leur sensibilité à basse vitesse est meilleure que celle des tachymètres à reluctance variable.

Cependant, l'environnement de l'extrémité de l'essieu subit d'importantes fluctuations de température liées à l'élévation de température du frein à l'atterrissage, et à l'abaissement de la température pendant le vol.

Or, les capteurs à effet Hall sont d'une plus grande sensibilité à l'environnement que les capteurs magnétiques passifs. En particulier, leur fonction de transfert est modifiée par la température et présente une grande variabilité à la fabrication, de sorte que l'utilisation de cette technologie nécessite de réaliser des mesures pour compenser ces facteurs. Le principe de la mesure par effet Hall peut requérir également la présence d'aimants avec des caractéristiques précises et stables dans le temps. Tout ceci implique d'associer à la fonction de mesure des fonctions de calibration et de compensation de température, ce qui rend complexe l'utilisation de ce type de technologie. Il a aussi été envisagé d'utiliser des solutions issues d'autres domaines industriels. Dans l'industrie, la mesure de vitesse de rotation d'un élément tournant est réalisée généralement par un codeur rapportant la position angulaire sur un bus numérique (on parle de « codeur absolu »), ou bien générant des « tops » à intervalles réguliers (on parle de « codeur incrémental »). Ces codeurs mettent en oeuvre une technologie magnétique, généralement à effet Hall, ou bien une technologie optique.

Les importantes fluctuations de température qui ont été évoquées créent des cycles de dilatations et de contractions des matériaux qui nuisent à l'efficacité des joints d'étanchéité et qui, dans le temps, dégradent les performances des capteurs nécessitant une bonne étanchéité, comme les capteurs optiques.

Parmi les inconvénients des solutions connues, on note aussi que les tachymètres actuels doivent être retirés au moment du démontage d'une roue et réinstallés au moment du remontage de la roue. Or, comme les démontages et remontages de roues sont assez fréquents et que les tachymètres dotés d'une grande précision sont relativement fragiles, le risque d'endommagement dû aux manipulations lors des démontages et remontages des roues est bien réel et important.

Selon US-A-2003/083797 l'élément sensible d'un capteur de vitesse peut être intégré dans un actionneur de freinage.

Selon US-A-2009/278401 un actionneur de freinage est associé avec un ensemble de roue et frein d'aéronef. Un capteur de vitesse délivre un signal de mesure représentatif d'une vitesse de rotation de la roue.

### OBJET DE L'INVENTION

L'invention a pour objet d'améliorer la précision du tachymètre d'une roue d'aéronef et d'augmenter sa durée de vie.

### RESUME DE L'INVENTION

En vue de la réalisation de ce but, on propose un ensemble de roue et frein d'aéronef, comprenant une roue, un frein agencé pour freiner la roue, et un dispositif de mesure agencé pour mesurer une vitesse de rotation de la roue, le frein comprenant au moins un organe de friction, un support d'actionneurs, et au moins un actionneur de freinage porté par le support d'actionneurs et agencé pour exercer sélectivement un effort de freinage sur l'organe de friction, le dispositif de mesure comprenant une cible et un composant sensible destiné à produire un signal de mesure représentatif d'une vitesse de rotation de la cible, l'ensemble de roue et frein d'aéronef étant agencé de sorte que, lorsque l'ensemble de roue et frein d'aéronef est assemblé, la cible est solidaire en rotation de la roue et le composant sensible est monté sur le support d'actionneurs, la cible et le composant sensible étant agencés de sorte que le composant sensible détecte une rotation de la cible.

Ainsi, dans l'ensemble de roue et frein d'aéronef selon l'invention, le composant sensible est monté sur le support d'actionneurs et ne se trouve plus à l'intérieur de l'essieu ou du capot. Il subit donc des cycles de température moins contraignants, ce qui augmente sa durée de vie. Cette configuration est compatible avec l'utilisation de capteurs actifs, qui présentent une meilleure sensibilité que les capteurs passifs, et notamment que les capteurs à reluctance variable. Comme le composant sensible se trouve sur le support d'actionneurs du côté du frein, il n'est plus nécessaire de le manipuler lors des démontages et remontages de la roue. On augmente ainsi à nouveau la durée de vie du composant sensible qui est nettement moins soumis aux risques d'endommagement liés aux démontages et remontages de la roue. On propose de plus un ensemble de roue et frein d'aéronef tel que celui qui vient d'être décrit, dans lequel la cible est montée sur une jante de la roue et est positionnée, selon un axe de rotation de la roue, entre le support d'actionneurs et la roue.

On propose en outre un ensemble de roue et frein d'aéronef tel que celui qui vient d'être décrit, dans lequel l'actionneur de freinage est positionné, selon une première direction radiale perpendiculaire à un axe de rotation de la roue, entre le composant sensible et l'axe de rotation de la roue.

On propose de plus un ensemble de roue et frein d'aéronef tel que celui qui vient d'être décrit, dans lequel le composant sensible est positionné, selon une première direction radiale perpendiculaire à un axe de rotation de la roue, entre l'actionneur de freinage et l'axe de rotation de la roue.

On propose de plus un ensemble de roue et frein d'aéronef tel que celui qui vient d'être décrit, dans lequel le composant sensible et la cible s'étendent successivement selon une direction axiale parallèle à un axe de rotation de la roue.

On propose aussi un ensemble de roue et frein d'aéronef tel que celui qui vient d'être décrit, dans lequel le composant sensible et la cible s'étendent successivement selon une deuxième direction radiale perpendiculaire à un axe de rotation de la roue.

On propose en outre un ensemble de roue et frein d'aéronef tel que celui qui vient d'être décrit, dans lequel la cible est une roue dentée à denture axiale.

On propose de plus un ensemble de roue et frein d'aéronef tel que celui qui vient d'être décrit, dans lequel la cible est une roue dentée à denture radiale.

On propose de plus un ensemble de roue et frein d'aéronef tel que celui qui vient d'être décrit, dans lequel la cible comprend une pluralité de rangées de dents.

On propose de plus un ensemble de roue et frein d'aéronef tel que celui qui vient d'être décrit, dans lequel la cible comporte une dent de référence comprenant une surépaisseur de sorte que le signal de mesure présente une forme particulière lorsque le composant sensible détecte la dent de référence.

On propose de plus un ensemble de roue et frein d'aéronef tel que celui qui vient d'être décrit, comprenant deux composants sensibles décalés d'une moitié d'une période d'un motif de la cible.

On propose de plus un ensemble de roue et frein d'aéronef tel que celui qui vient d'être décrit, comprenant deux composants sensibles décalés d'un module impair d'un quart d'une période d'un motif de la cible.

On propose de plus un ensemble de roue et frein d'aéronef tel que celui qui vient d'être décrit, dans lequel le composant sensible est un capteur magnétique.

On propose aussi un ensemble de roue et frein d'aéronef tel que celui qui vient d'être décrit, dans lequel le composant sensible est un capteur optique.

On propose de plus un ensemble de roue et frein d'aéronef tel que celui qui vient d'être décrit, dans lequel le composant sensible est un capteur à ultrasons.

On propose en outre un atterrisseur d'aéronef comprenant un ensemble de roue et frein d'aéronef tel que celui qui vient d'être décrit.

On propose aussi un aéronef comprenant un atterrisseur d'aéronef tel que celui qui vient d'être décrit. L'invention sera mieux comprise à la lumière de la description qui suit de modes de mise en oeuvre particuliers non limitatifs de l'invention.

### BREVE DESCRIPTION DES DESSINS

Il sera fait référence aux dessins annexés, parmi lesquels :
- la figure 1 représente une vue en coupe, selon un plan perpendiculaire à un axe de rotation d'une roue d'aéronef, de la roue et d'un premier tachymètre de l'art antérieur ;
- la figure 2 représente une vue en coupe, selon un plan perpendiculaire à un axe de rotation d'une roue d'aéronef, de la roue et d'un deuxième tachymètre de l'art antérieur ;
- la figure 3 représente une vue en coupe, selon un plan perpendiculaire à un axe de rotation d'une roue, d'un ensemble de roue et frein d'aéronef selon un premier mode de réalisation de l'invention ;
- la figure 4 est une vue similaire à celle de la figure 3 mais plus détaillée, une cible du dispositif de mesure étant une cible à denture radiale ;
- la figure 5 est une vue de détail de la figure 4 ;
- la figure 6 est une vue similaire à celle de la figure 3 mais plus détaillée, une cible du dispositif de mesure étant une cible à denture axiale ;
- la figure 7 représente la cible et deux composants sensibles ;
- la figure 8 est un graphique comprenant des courbes de signaux électriques de mesure obtenus dans une configuration dans laquelle le dispositif de mesure comprend deux composants sensibles décalés d'un quart d'une période d'un motif de la cible ;
- la figure 9 est un graphique similaire à celui de la figure 8, dans une configuration où la cible comprend deux rangées de dents ;
- la figure 10 représente un composant sensible et une cible ayant une dent de référence présentant une surépaisseur ;
- la figure 11 est un graphique comprenant des courbes de signaux électriques de mesure obtenus dans la configuration de la figure 10 ;
- la figure 12 représente une vue en coupe, selon un plan perpendiculaire à un axe de rotation d'une roue, d'un ensemble de roue et frein d'aéronef selon un deuxième mode de réalisation de l'invention ;
- la figure 13 est une vue similaire à celle de la figure 12 mais plus détaillée, une cible du dispositif de mesure étant une cible à denture radiale ;
- la figure 14 est une vue de détail de la figure 13 ;
- la figure 15 est une vue similaire à celle de la figure 12 mais plus détaillée, une cible du dispositif de mesure étant une cible à denture axiale ;
- la figure 16 représente la cible et deux composants sensibles.

### DESCRIPTION DETAILLEE DE L'INVENTION

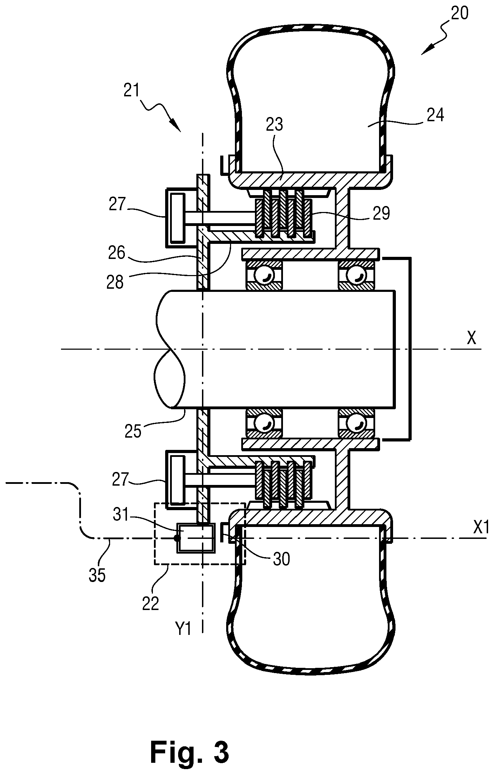

En référence à la figure 3, un ensemble de roue et frein d'aéronef selon un premier mode de réalisation de l'invention comporte une roue 20 d'un atterrisseur d'un aéronef, un frein 21 et un dispositif de mesure 22 de la vitesse angulaire de la roue 20.

On décrit l'ensemble de roue et frein d'aéronef selon un premier mode de réalisation de l'invention alors que celui-ci est assemblé.

La roue 20 comporte une jante 23 qui reçoit un pneumatique 24 et qui est montée en rotation sur un essieu 25 situé au bas de l'atterrisseur.

Le frein 21 est destiné à freiner la roue 20. Le frein 21 est ici un frein hydraulique. Le frein 21 comprend un support d'actionneurs, en l'occurrence une couronne 26, qui porte au moins un actionneur de freinage, en l'occurrence une pluralité d'actionneurs de freinage 27. La couronne 26 est montée sur l'essieu 25.

Un tube de torsion 28 est fixé à la couronne 26. Le tube de torsion 28 s'étend dans la jante 23. La couronne 26, et donc le tube de torsion 28, sont arrêtés en rotation vis-à-vis de l'essieu 25 par des moyens d'arrêt non représentés ici.

Le frein 21 comprend aussi au moins un organe de friction, en l'occurrence une pile de disques de carbone 29 composée de rotors qui sont solidaires en rotation de la jante 23 et de stators qui sont solidaires en rotation du tube de torsion 28.

Les actionneurs de freinage 27 sont agencés pour exercer sélectivement, lors de l'admission de fluide sous pression, un effort de freinage sur les disques de carbone.

Le dispositif de mesure 22 comprend une cible 30 et un composant sensible 31 destiné à produire un signal électrique de mesure représentatif de la vitesse de rotation de la cible 30.

La cible 30 est ici une roue dentée métallique qui est montée sur la jante 23 de la roue 20. Par « montée », on entend que la cible 30 est fixée directement sur la jante 23, ou bien est fixée sur un support lui-même fixé sur la jante 23.

La cible 30 est positionnée, selon un axe de rotation X de la roue 20, entre la couronne 26 et la roue 20.

Le composant sensible 31, quant à lui, est monté sur la couronne 26. A nouveau, par « monté », on entend que le composant sensible 31 est fixé directement sur la couronne 26, ou bien est fixé sur un support lui-même fixé sur la couronne 26.

Le composant sensible 31 s'étend depuis une face de la couronne 26 positionnée en regard d'une face interne de la roue 20, ladite face interne de la roue 20 étant la face de la roue 20 du côté de laquelle se trouve le frein 21.

On voit que l'actionneur de freinage 27 qui est proche du composant sensible 31 est positionné, selon une première direction radiale Y1 perpendiculaire à l'axe de rotation X de la roue 20, entre le composant sensible 31 et l'axe de rotation X de la roue 20. En d'autres termes, le composant sensible 31 est situé au niveau d'une portion externe de la couronne 26, proche de la périphérie ou sur la périphérie de la couronne 26.

On note qu'il serait parfaitement possible de prévoir que le composant sensible 31 soit positionné, selon la première direction radiale Y1 perpendiculaire à l'axe de rotation X de la roue 20, entre l'actionneur de freinage 27 et l'axe de rotation X de la roue 20. En d'autres termes, le composant sensible 31 peut aussi être situé au niveau d'une portion interne, centrale de la couronne 26, proche du centre de celle-ci.

Le dispositif de mesure 22 est ici agencé selon une configuration axiale : le composant sensible 31 et la cible 30 s'étendent successivement selon une direction axiale X1 parallèle à l'axe de rotation X de la roue 20.

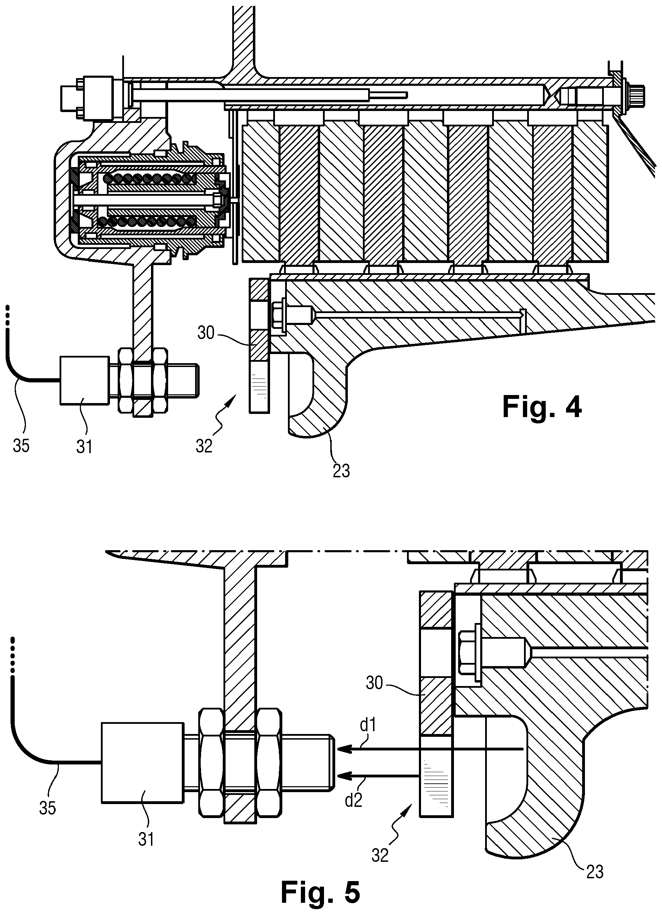

En référence aux figures 4 et 5, on constate que la cible 30 peut être une cible à denture radiale : les dents 32 s'étendent depuis une portion principale et centrale de la cible selon des directions radiales, c'est-à-dire perpendiculaires à l'axe de rotation X de la roue 20.

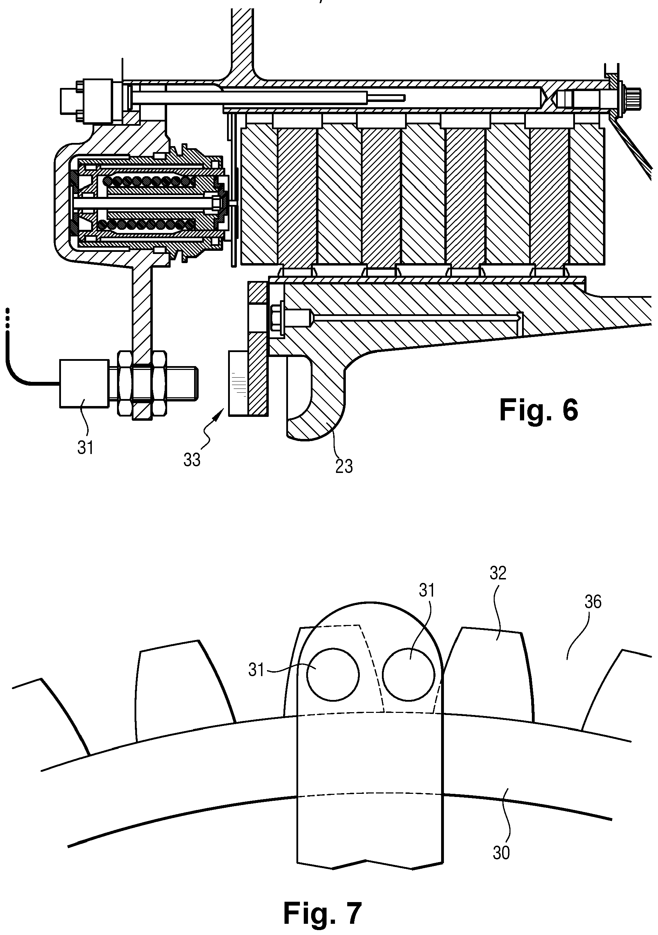

En référence à la figure 6, on constate que la cible 30 peut être une cible à denture axiale : les dents 33 s'étendent depuis une portion principale et plane de la cible selon des directions axiales, c'est-à-dire parallèles à l'axe de rotation X de la roue 20.

Le composant sensible 31 est ici un capteur magnétique, en l'occurrence un capteur à effet Hall. La distance entre le capteur à effet Hall 31 et la cible 30 est ici comprise entre 1mm et 7mm.

Le capteur à effet Hall 31 est relié à une unité de traitement située dans le fuselage de l'aéronef ou bien sur l'atterrisseur ou bien dans l'essieu 25. La liaison est ici une liaison filaire via le câble 35 mais pourrait être une liaison sans fil. L'unité de traitement peut aussi être appelée calculateur, contrôleur, concentrateur de données, etc.

Lorsqu'un creux se trouve en face du capteur à effet Hall 31, la distance entre le capteur à effet Hall 31 et la masse métallique la plus proche est égale à d1 (voir figure 5) . Lorsqu'une dent 32 (ou 33) se trouve en face du capteur à effet Hall 31, la distance entre le capteur à effet Hall 31 et la masse métallique la plus proche est égale à d2.

Le capteur à effet Hall 31 produit ainsi un signal électrique de mesure, en l'occurrence un signal analogique, dont l'amplitude dépend de la présence d'une dent 32 ou d'un creux en face du capteur à effet Hall 31. Le capteur à effet Hall 31 détecte ainsi une rotation de la cible 30.

Le signal électrique de mesure a une fréquence qui est proportionnelle à la vitesse de rotation de la cible 30 et donc à la vitesse de rotation de la roue 20. L'unité de traitement acquiert le signal électrique de mesure et produit à partir du signal électrique de mesure une estimation de la vitesse de rotation de la cible 30 et donc de la vitesse de rotation de la roue 20.

Avantageusement, en référence à la figure 7, on utilise non pas un mais plusieurs capteurs à effet Hall 31.

Le dispositif de mesure 22 est alors robuste à la présence de jeux mécaniques et aux vibrations qui affectent la mesure de distance et donc l'amplitude du signal électrique de mesure. Dans un système à mesure de fréquence, comme c'est le cas ici, des variations d'amplitude peuvent être tolérées, mais il est préférable de les réduire afin d'éviter les erreurs de mesure. L'utilisation de plusieurs capteurs à effet Hall 31 permet d'éliminer de la mesure les grandeurs parasites qui affectent de la même façon les capteurs à effet Hall 31, telles que la température, les déformations de la roue ou les vibrations subies par la roue.

On utilise en l'occurrence deux capteurs à effet Hall 31. Ici, les capteurs à effet Hall 31 sont décalés d'une moitié d'une période du motif de la cible 30. Une période du motif correspond à une dent 32 suivie d'un creux 36 (ou inversement).

Les deux signaux électriques de mesure produits par les deux capteurs à effet Hall 31 représentent la même réponse associée à la géométrie de la cible 30, avec un décalage d'une demi-période. Les deux signaux électriques de mesure sont donc en opposition de phase.

On produit alors la différence entre les deux signaux électriques de mesure (par calcul ou bien au moyen d'un circuit numérique ou analogique). Les amplitudes des deux signaux électriques de mesure, qui sont en opposition de phase, vont donc s'ajouter. A l'inverse, les effets parasites locaux vont être éliminés ou tout au moins atténués lors de la différentiation. Ainsi, par exemple, comme les effets des vibrations dans les directions axiales affectent de la même manière les capteurs à effet Hall 31, les effets de ces vibrations se compensent lors de la différentiation et sont donc éliminés ou presque.

Le dispositif de mesure 22 peut aussi permettre de déterminer le sens de rotation de la roue 20. Cette information peut être utile pour des fonctions autres que le freinage. Parmi ces fonctions, on trouve notamment une fonction d'engagement du système de taxiage électrique pendant le roulage de l'aéronef. On trouve aussi une fonction d'odométrie permettant d'estimer précisément le positionnement de l'aéronef au sol.

On positionnera ainsi les capteurs à effet Hall 31 dans des positions permettant à la fois de mettre en oeuvre la différentiation qui vient d'être évoquée, et de déterminer le sens de rotation de la roue 20.

Ici, les deux capteurs à effet Hall 31 sont décalés à cet effet d'un module impair d'un quart d'une période du motif de la cible 30, par exemple 1/4, 3/4, ou 5/4 de la période du motif. Le choix dépend notamment de la taille des dents 32 et du diamètre du capteur à effet Hall 31.

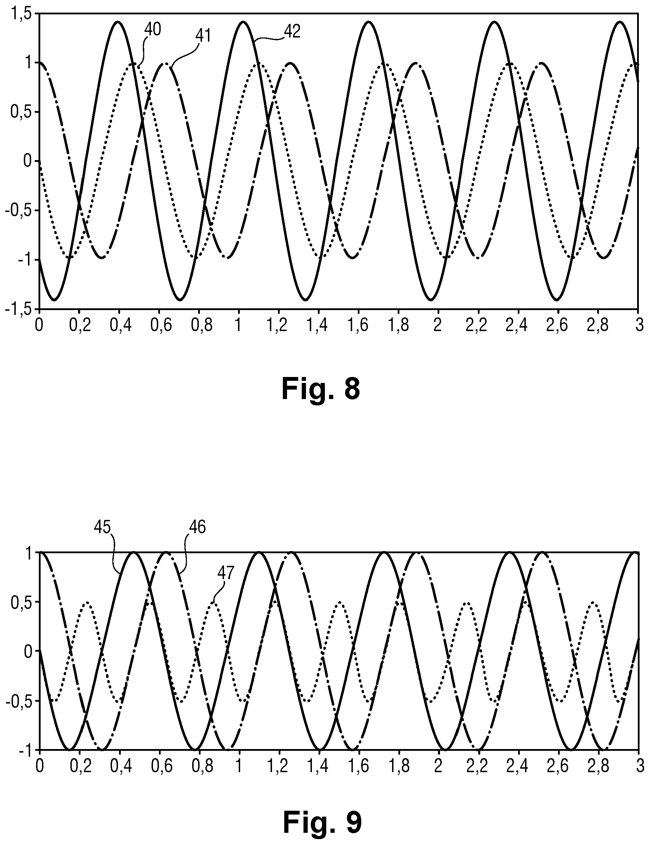

Les courbes visibles sur la figure 8 correspondent à une configuration dans laquelle l'écartement entre les deux capteurs à effet Hall 31 est égal à un quart d'une période du motif.

La courbe 40 représente le signal électrique de mesure produit par un premier capteur à effet Hall. La courbe 41 représente le signal électrique de mesure produit par un deuxième capteur à effet Hall. La courbe 42 représente un signal résultant égal à la différence entre les deux signaux électriques de mesure.

On voit que le signal résultant présente une fréquence multiple de la fréquence de rotation de la roue 20. Le signal résultant est débarrassé des perturbations locales. Le sens de rotation de la roue 20 est déterminé par le signe du retard de phase du signal électrique de mesure produit par le deuxième capteur à effet Hall (courbe 41) par rapport au signal électrique de mesure produit par le premier capteur à effet Hall (courbe 40) : +n/2 pour une rotation dans un sens donné, -n/2 pour une rotation dans l'autre sens.

On peut par ailleurs améliorer la mesure de la manière suivante.

On sait que le nombre de cycles par tour de roue 20 est donné par le nombre de dents 32 de la cible 30.

Une augmentation du nombre de cycles par tour apporte par exemple l'avantage d'améliorer la mesure lors de vitesses plus faibles pendant le freinage. En effet, le temps de mesure nécessaire pour réaliser la mesure augmente avec la période du motif.

Par exemple, si l'on souhaite mesurer une vitesse de rotation de 1Hz, avec une roue à 100 dents, le temps de mesure d'une période est de 1/100Hz, soit 10ms. On peut descendre à 5ms en utilisant la mesure d'une demi-période du motif. Il n'est pas possible de mesurer la vitesse avec un taux de rafraîchissement meilleur que 5ms, à moins d'augmenter le nombre de cycles par tour, et donc le nombre de dents. Ce nombre est limité par le diamètre de la cible (qui est par exemple sensiblement égal au diamètre de la jante de la roue), le nombre de dents qu'il est possible de réaliser dans un tel diamètre, et la résolution angulaire du capteur à effet Hall.

On utilise donc une cible comprenant plusieurs roues dentées, c'est à dire plusieurs rangées de dents, associées chacune à leur(s) capteur(s) à effet Hall. On obtient de la sorte un signal résultant à fréquence double du nombre de dents de chaque rangée (si deux rangées sont utilisées), et on pallie de la sorte les limitations liées à la technologie qui viennent d'être évoquées.

Les courbes visibles sur la figure 9 correspondent à une configuration où deux rangées de dent sont utilisées, les deux rangées de dents étant décalées angulairement d'un quart de période du motif, ce qui permet là encore de déterminer le sens de rotation de la roue 20.

La courbe 45 représente le signal électrique de mesure produit par le capteur à effet Hall associé à une première rangée de dents. La courbe 46 représente le signal électrique de mesure produit par le capteur à effet Hall associé à une deuxième rangée de dents.

La courbe 47 représente le signal résultant produit par combinaison des deux signaux électriques de mesure. Le nombre de cycles du signal résultant est doublé par rapport au nombre de cycles des signaux électriques de mesure.

Il peut aussi être avantageux de déterminer la position angulaire de la roue 20. Cette information est utile par exemple, à nouveau, pour la fonction d'engagement du système de taxiage électrique lorsque l'aéronef roule à basse vitesse. La vitesse du moteur de taxiage, qui entraîne la roue 20 en rotation, doit en effet être synchronisée avec la vitesse de rotation de la roue 20 pour permettre l'engrainement sans à coup. La connaissance fine de la position de la roue 20, en plus de la connaissance de la vitesse de rotation de la roue 20, permet d'insérer les dents du système d'engrainement dans celles du dispositif d'entraînement de la roue sans risque de choc entre les deux. La détermination de la position angulaire de la roue 20 peut également servir à la fonction d'odométrie.

La position angulaire de la roue 20 peut être obtenue grâce à l'ajout d'un système permettant de connaître la position des dents 32 de la cible 30 par rapport à une origine.

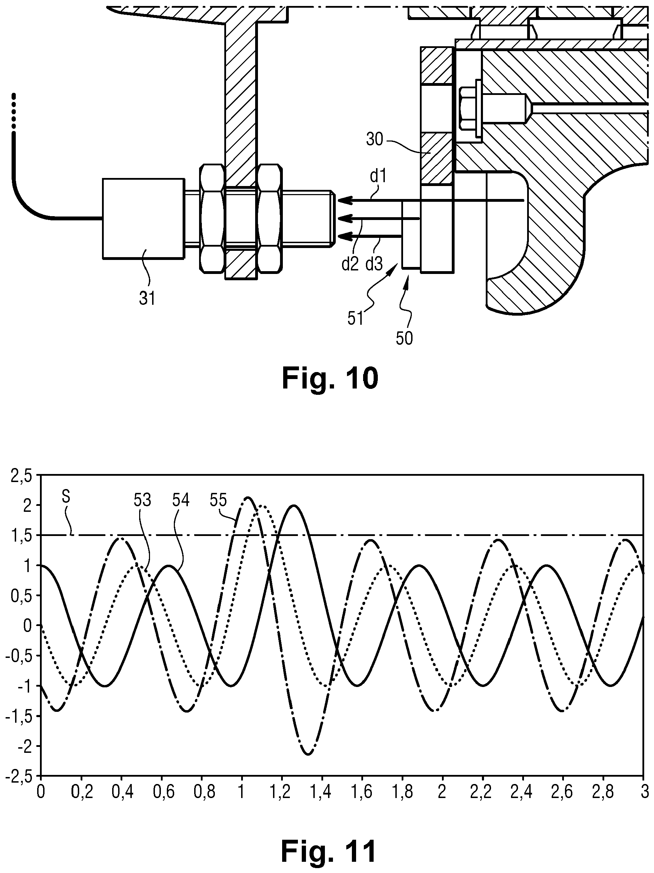

En référence à la figure 10, on ajoute pour cela une surépaisseur 50 sur une dent de référence 51 de la cible 30. Cette surépaisseur 50 modifie la distance entre le capteur à effet Hall 31 et la cible 30 lorsque la dent de référence 51 se trouve en face du capteur à effet Hall 31, ladite distance étant alors égale à d3 (et non pas à d2). La surépaisseur 50 affecte l'amplitude du signal électrique de mesure obtenu spécifiquement pour cette position de la cible 30 : le signal électrique de mesure comprend une forme particulière correspondant une détection par le composant de mesure de la dent de référence 51. On identifie de la sorte l'origine de la position angulaire.

Ainsi, sur la figure 11, la courbe 53 représente un signal électrique de mesure produit par le premier capteur à effet Hall, la courbe 54 représente un signal électrique de mesure produit par le deuxième capteur à effet Hall 31, alors que la courbe 55 représente un signal résultant égal à la différence entre les deux signaux électriques de mesure. Le passage à zéro, c'est-à-dire le passage de la dent de référence 51 devant le capteur à effet Hall, peut être détecté par seuillage : on compare l'amplitude du signal résultant avec un seuil prédéterminé S, et on considère que le passage à zéro se produit lorsque l'amplitude du signal résultant est supérieure audit seuil prédéterminé S.

La position angulaire de la cible 30 et donc de la roue 20 peut alors être obtenue, par exemple par comptage des cycles depuis le passage à zéro. La position angulaire est donc connue à 360°/N près, où N est le nombre de dents de la cible 30.

On note qu'un dispositif de mesure à trois capteurs, dans lequel on effectue la différence entre le signal électrique de mesure produit par un capteur central avec les signaux électriques de mesure produits par les capteurs voisins, permet de déterminer une position angulaire précise entre deux dents.

On peut aussi choisir, dans un système avec de multiples rangées de dents, de différencier le profil de chacune des rangées de dents. Ceci permet d'améliorer la mesure de la position angulaire, et notamment de permettre un positionnement angulaire absolu de la roue.

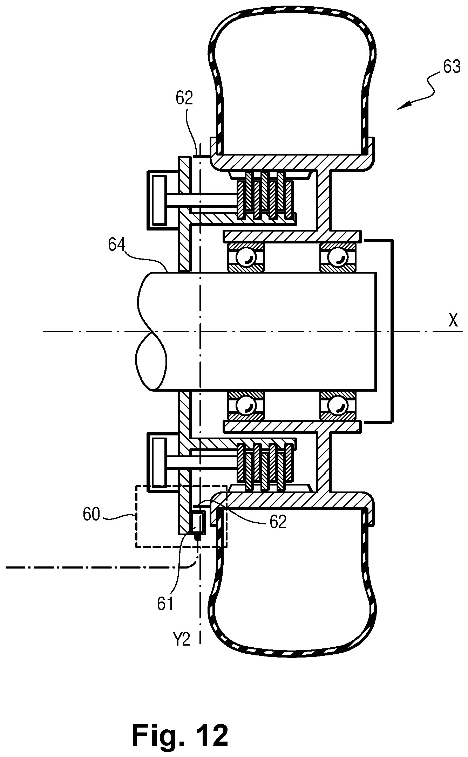

En référence à la figure 12, le dispositif de mesure 60 d'un ensemble de roue et frein d'aéronef selon un deuxième mode de réalisation de l'invention peut aussi être agencé selon une configuration radiale : le capteur à effet Hall 61 et la cible 62 s'étendent successivement selon une deuxième direction radiale Y2 perpendiculaire à un axe de rotation X de la roue 63.

On voit sur la figure 12 que la cible 62 est positionnée entre le capteur à effet Hall 61 et l'essieu 64. Bien sûr, le capteur à effet Hall 61 pourrait très bien être positionné entre l'essieu 64 et la cible 62.

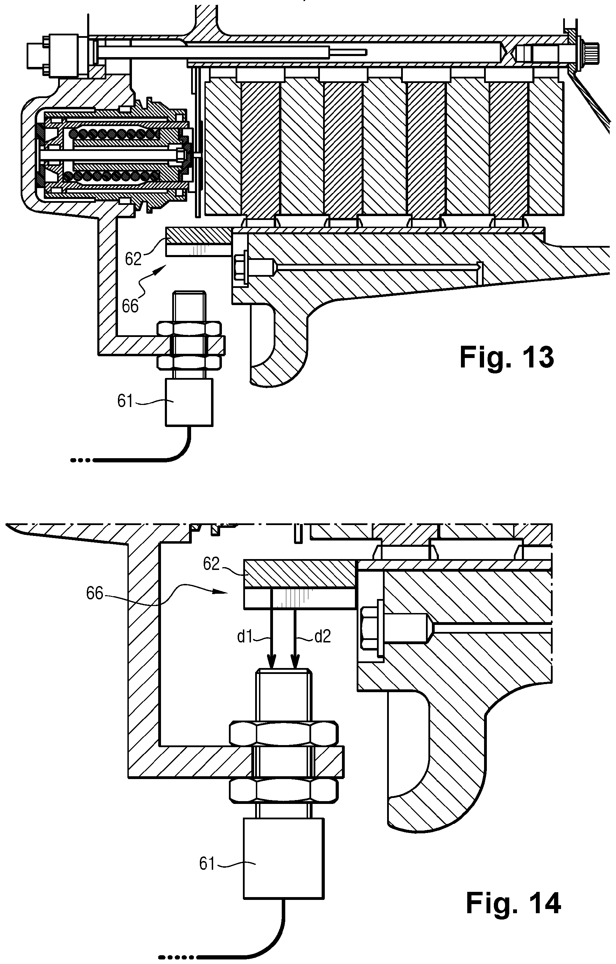

En référence aux figures 13 et 14, on constate que la cible 62 peut être une cible à denture radiale : les dents 66 s'étendent depuis une portion principale centrale de la cible 62 selon des directions radiales, c'est-à-dire perpendiculaires à l'axe de rotation de la roue.

Lorsqu'un creux se trouve en face du capteur à effet Hall 61, la distance entre le capteur à effet Hall et la masse métallique la plus proche est égale à d1.

Lorsqu'une dent 66 se trouve en face du capteur à effet Hall 61, la distance entre le capteur à effet Hall 61 et la masse métallique la plus proche est égale à d2.

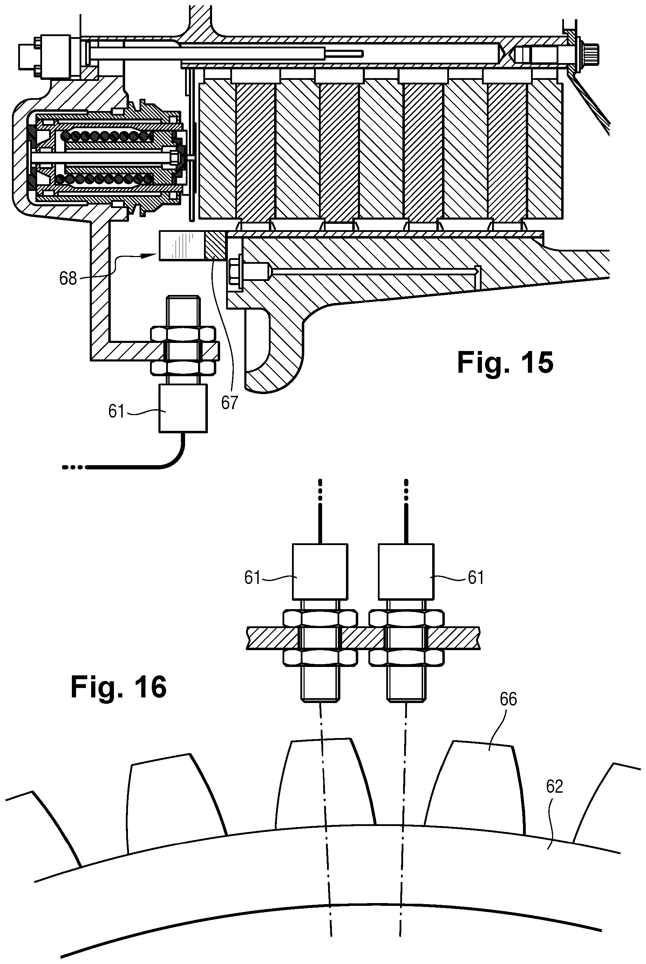

En référence à la figure 15, on constate que la cible 67 peut être une cible à denture axiale : les dents 68 s'étendent depuis une portion principale plane de la cible 67 selon des directions axiales, c'est-à-dire parallèles à l'axe de rotation X de la roue 63.

A nouveau, le signal électrique de mesure produit par le capteur à effet Hall 61 présente une alternance électrique résultant de l'alternance entre les dents et les creux de la cible.

Avantageusement, à nouveau, en référence à la figure 16, on utilise non pas un mais plusieurs, en l'occurrence deux capteurs à effet Hall 61.

On fait la différence entre les deux signaux électriques de mesure pour améliorer la mesure et supprimer les effets parasites locaux.

Bien entendu, l'invention n'est pas limitée aux modes de réalisation décrits mais englobe toute variante entrant dans le champ de l'invention telle que définie par les revendications.

On a décrit ici que le composant sensible est un capteur à effet Hall, et que la cible est une roue dentée. Cette configuration ne limite en aucun cas la portée de l'invention.

On note tout d'abord que, quelle que soit la technologie utilisée, le composant sensible peut par exemple être un capteur de distance ou un détecteur.

Le détecteur fournit un signal de mesure de type « tout ou rien » selon que la distance entre le détecteur et la cible est supérieure ou non à un seuil prédéfini.

Le capteur de distance fournit un signal de mesure qui dépend de la distance entre le capteur et à la cible, comme c'est le cas pour un capteur de proximité par exemple.

La technologie de mesure peut être une technologie inductive.

Le composant sensible peut alors par exemple être un capteur de proximité inductif. Un capteur inductif nécessitera une cible fabriquée dans un matériau métallique.

La technologie de mesure peut être une technologie magnétique. Le capteur est par exemple, comme décrit dans cette demande, un capteur à effet Hall. Il pourrait d'ailleurs être avantageux de remplacer la roue dentée par une roue munie d'aimants.

La portée des technologies inductive et magnétique peut être supérieure à 10mm, ce qui permet d'avoir un dispositif de mesure compatible avec les effets de déformations et de vibrations de la roue lors des freinages de l'aéronef et/ou des virages effectués par l'aéronef.

Une technologie à ultrasons peut aussi être utilisée. Les capteurs et les détecteurs à ultrasons sont particulièrement efficaces pour des distances de mesure de plusieurs centimètres. Ils permettent de plus la mesure sur des matériaux non métalliques, ce qui rend possible l'utilisation de cibles en matériaux composites plus légers. Une technologie optique est aussi envisageable. Les capteurs et détecteurs optiques sont également adaptés aux distances de mesure centimétriques, et présentent l'avantage de permettre la mesure sur n'importe quel matériau cible d'opacité suffisante.

Ainsi, dans le premier mode de réalisation, c'est-à-dire lorsque le dispositif de mesure est agencé selon une configuration axiale (voir les figures 3 à 6), la distance de mesure peut atteindre plusieurs centimètres, notamment pour tenir compte des déformations ou vibration de la roue. La mesure par ultrasons pourrait alors être la plus adaptée. Le frein de l'ensemble de roue et frein n'est bien sûr pas nécessairement un frein hydraulique mais peut être un frein électromécanique. Le support d'actionneurs est dans ce cas un porte-actionneurs.

La cible n'est pas nécessairement montée sur la jante de la roue, mais pourrait par exemple être formée sur ou dans le pneumatique.

## Revendications

1. Ensemble de roue et frein d'aéronef, comprenant une roue (20 ; 63), un frein (21) agencé pour freiner la roue, et un dispositif de mesure (22 ; 60) agencé pour mesurer une vitesse de rotation de la roue, le frein comprenant au moins un organe de friction (29), un support d'actionneurs (26), et au moins un actionneur de freinage (27) porté par le support d'actionneurs et agencé pour exercer sélectivement un effort de freinage sur l'organe de friction, le dispositif de mesure comprenant une cible (30 ; 62) et un composant sensible (31 ; 61) destiné à produire un signal de mesure représentatif d'une vitesse de rotation de la cible, l'ensemble de roue et frein d'aéronef étant agencé de sorte que, lorsque l'ensemble de roue et frein d'aéronef est assemblé, la cible (30 ; 62) est solidaire en rotation de la roue et le composant sensible est monté sur le support d'actionneurs (26), la cible et le composant sensible étant agencés de sorte que le composant sensible détecte une rotation de la cible.

2. Ensemble de roue et frein d'aéronef selon la revendication 1, dans lequel la cible (30 ; 62) est montée sur une jante (23) de la roue et est positionnée, selon un axe de rotation de la roue (X), entre le support d'actionneurs et la roue.

3. Ensemble de roue et frein d'aéronef selon l'une des revendications précédentes, dans lequel l'actionneur de freinage (27) est positionné, selon une première direction radiale (Y1) perpendiculaire à un axe de rotation de la roue, entre le composant sensible (31 ; 61) et l'axe de rotation de la roue.

4. Ensemble de roue et frein d'aéronef selon l'une des revendications 1 ou 2, dans lequel le composant sensible (31 ; 61) est positionné, selon une première direction radiale (Y1) perpendiculaire à un axe de rotation de la roue, entre l'actionneur de freinage (27) et l'axe de rotation de la roue.

5. Ensemble de roue et frein d'aéronef selon l'une des revendications précédentes, dans lequel le composant sensible et la cible s'étendent successivement selon une direction axiale (X1) parallèle à un axe de rotation de la roue.

6. Ensemble de roue et frein d'aéronef selon l'une des revendications 1 à 4, dans lequel le composant sensible et la cible s'étendent successivement selon une deuxième direction radiale (Y2) perpendiculaire à un axe de rotation de la roue.

7. Ensemble de roue et frein d'aéronef selon l'une des revendications précédentes, dans lequel la cible est une roue dentée à denture axiale.

8. Ensemble de roue et frein d'aéronef selon l'une des revendications 1 à 6, dans lequel la cible est une roue dentée à denture radiale.

9. Ensemble de roue et frein d'aéronef selon l'une des revendications 7 ou 8, dans lequel la cible comprend une pluralité de rangées de dents.

10. Ensemble de roue et frein d'aéronef selon l'une des revendications 7 à 9, dans lequel la cible comporte une dent de référence (51) comprenant une surépaisseur (53) de sorte que le signal de mesure présente une forme particulière lorsque le composant sensible détecte la dent de référence.

11. Ensemble de roue et frein d'aéronef selon l'une des revendications précédentes, comprenant deux composants sensibles (31 ; 61) décalés d'une moitié d'une période d'un motif de la cible.

12. Ensemble de roue et frein d'aéronef selon l'une des revendications 1 à 10, comprenant deux composants sensibles (31 ; 61) décalés d'un module impair d'un quart d'une période d'un motif de la cible.

13. Ensemble de roue et frein d'aéronef selon l'une des revendications précédentes, dans lequel le composant sensible (31 ; 61) est un capteur magnétique.

14. Ensemble de roue et frein d'aéronef selon l'une des revendications précédentes, dans lequel le composant sensible (31 ; 61) est un capteur optique.

15. Ensemble de roue et frein d'aéronef selon l'une des revendications précédentes, dans lequel le composant sensible (31 ; 61) est un capteur à ultrasons.

16. Atterrisseur d'aéronef comprenant un ensemble de roue et frein d'aéronef selon l'une des revendications précédentes.

17. Aéronef comprenant un atterrisseur d'aéronef selon la revendication 16.

## Patentansprüche

1. Anordnung aus Rad und Bremse eines Luftfahrzeugs, umfassend ein Rad (20; 63), eine Bremse (21), die ausgebildet ist, das Rad zu bremsen, und eine Messvorrichtung (22; 60), die ausgebildet ist, eine Drehgeschwindigkeit des Rades zu messen, wobei die Bremse mindestens ein Reibelement (29), einen Aktorträger (26) und mindestens einen Bremsaktor (27) umfasst, der von dem Aktorträger getragen wird und ausgebildet ist, selektiv eine Bremskraft auf das Reibelement auszuüben, wobei die Messvorrichtung ein Ziel (30; 62) und eine empfindliche Komponente (31; 61) umfasst, die dazu bestimmt ist, ein Messsignal zu erzeugen, das repräsentativ für eine Drehgeschwindigkeit des Ziels ist, wobei die Anordnung aus Rad und Bremse eines Luftfahrzeugs derart ausgebildet ist, dass, wenn die Anordnung aus Rad und Bremse eines Luftfahrzeugs zusammengefügt ist, das Ziel (30; 62) drehfest mit dem Rad verbunden ist und die empfindliche Komponente an dem Aktorträger (26) montiert ist, wobei das Ziel und die empfindliche Komponente derart ausgebildet sind, dass die empfindliche Komponente eine Drehung des Ziels erfasst.

2. Anordnung aus Rad und Bremse eines Luftfahrzeugs nach Anspruch 1, bei der das Ziel (30; 62) an einer Felge (23) des Rades montiert und gemäß einer Rotationsachse des Rades (X) zwischen dem Aktorträger und dem Rad positioniert ist.

3. Anordnung aus Rad und Bremse eines Luftfahrzeugs nach einem der vorhergehenden Ansprüche, bei der der Bremsaktor (27) gemäß einer ersten radialen Richtung (Y1), die senkrecht zu einer Drehachse des Rades ist, zwischen der empfindlichen Komponente (31; 61) und der Drehachse des Rades positioniert ist.

4. Anordnung aus Rad und Bremse eines Luftfahrzeugs nach einem der Ansprüche 1 oder 2, bei der die empfindliche Komponente (31; 61) gemäß einer ersten radialen Richtung (Y1), die senkrecht zu einer Drehachse des Rades ist, zwischen dem Bremsaktor (27) und der Drehachse des Rades positioniert ist.

5. Anordnung aus Rad und Bremse eines Luftfahrzeugs nach einem der vorhergehenden Ansprüche, bei der sich die empfindliche Komponente und das Ziel nacheinander gemäß einer axialen Richtung (X1) erstrecken, die parallel zu einer Drehachse des Rades ist.

6. Anordnung aus Rad und Bremse eines Luftfahrzeugs nach einem der Ansprüche 1 bis 4, bei der sich die empfindliche Komponente und das Ziel nacheinander gemäß einer zweiten radialen Richtung (Y2) erstrecken, die senkrecht zu einer Drehachse des Rades ist.

7. Anordnung aus Rad und Bremse eines Luftfahrzeugs nach einem der vorhergehenden Ansprüche, bei der das Ziel ein Zahnrad mit Axialverzahnung ist.

8. Anordnung aus Rad und Bremse eines Luftfahrzeugs nach einem der Ansprüche 1 bis 6, bei der das Ziel ein Zahnrad mit Radialverzahnung ist.

9. Anordnung aus Rad und Bremse eines Luftfahrzeugs nach einem der Ansprüche 7 oder 8, bei der das Ziel mehrere Reihen von Zähnen umfasst.

10. Anordnung aus Rad und Bremse eines Luftfahrzeugs nach einem der Ansprüche 7 bis 9, bei der das Ziel einen Referenzzahn (51) umfasst, der eine Überdicke (53) umfasst, derart, dass das Messsignal eine besondere Form aufweist, wenn die empfindliche Komponente den Referenzzahn erfasst.

11. Anordnung aus Rad und Bremse eines Luftfahrzeugs nach einem der vorhergehenden Ansprüche, umfassend zwei empfindliche Komponenten (31; 61), die um eine Hälfte einer Periode eines Musters des Ziels versetzt sind.

12. Anordnung aus Rad und Bremse eines Luftfahrzeugs nach einem der Ansprüche 1 bis 10, umfassend zwei empfindliche Komponenten (31; 61), die um einen ungeraden Modulo eines Viertels einer Periode eines Musters des Ziels versetzt sind.

13. Anordnung aus Rad und Bremse eines Luftfahrzeugs nach einem der vorhergehenden Ansprüche, bei der die empfindliche Komponente (31; 61) ein magnetischer Sensor ist.

14. Anordnung aus Rad und Bremse eines Luftfahrzeugs nach einem der vorhergehenden Ansprüche, bei der die empfindliche Komponente (31; 61) ein optischer Sensor ist.

15. Anordnung aus Rad und Bremse eines Luftfahrzeugs nach einem der vorhergehenden Ansprüche, bei der die empfindliche Komponente (31; 61) ein Ultraschallsensor ist.

16. Luftfahrzeugfahrwerk, umfassend eine Anordnung aus Rad und Bremse eines Luftfahrzeugs nach einem der vorhergehenden Ansprüche.

17. Luftfahrzeug, umfassend ein Luftfahrzeugfahrwerk nach Anspruch 16.

## Claims

1. An aircraft wheel and brake assembly comprising a wheel (20; 63), a brake (21) arranged to brake the wheel, and a measurement device (22; 60) arranged to measure the speed of rotation of the wheel, the brake comprising at least one friction member (29), an actuator support (26), and at least one brake actuator (27) carried by the actuator support and arranged to exert a braking force selectively on the friction member, the measurement device comprising a target (30; 62) and a sensing component (31; 61) for producing a measurement signal representative of a speed of rotation of the target, the aircraft wheel and brake assembly being arranged in such a manner that, when the aircraft wheel and brake assembly is assembled, the target (30; 62) is constrained to rotate with the wheel and the sensing component is mounted on the actuator support (26), the target and the sensing component being arranged in such a manner that the sensing component detects rotation of the target.

2. An aircraft wheel and brake assembly according to claim 1, wherein the target (30; 62) is mounted on a rim (23) of the wheel and is positioned, along the axis of rotation (X) of the wheel, between the actuator support and the wheel.

3. An aircraft wheel and brake assembly according to any preceding claim, wherein the brake actuator (27) is positioned, along a first radial direction (Y1) perpendicular to the axis of rotation of the wheel, between the sensing component (31; 61) and the axis of rotation of the wheel.

4. An aircraft wheel and brake assembly according to claim 1 or claim 2, wherein the sensing component (31; 61) is positioned, along a first radial direction (Y1) perpendicular to the axis of rotation of the wheel, between the brake actuator (27) and the axis of rotation of the wheel.

5. An aircraft wheel and brake assembly according to any preceding claim, wherein the sensing component and the target extend in succession along an axial direction (X1) parallel to the axis of rotation of the wheel.

6. An aircraft wheel and brake assembly according to any one of claims 1 to 4, wherein the sensing component and the target extend in succession along a second radial direction (Y2) perpendicular to the axis of rotation of the wheel.

7. An aircraft wheel and brake assembly according to any preceding claim, wherein the target is a toothed wheel having axial teeth.

8. An aircraft wheel and brake assembly according to any one of claims 1 to 6, wherein the target is a toothed wheel having radial teeth.

9. An aircraft wheel and brake assembly according to claim 7 or claim 8, wherein the target comprises a plurality of rows of teeth.

10. An aircraft wheel and brake assembly according to any one of claims 7 to 9, wherein the target includes a reference tooth (51) comprising an extra thickness (53) such that the measurement signal presents a particular shape when the sensing component detects the reference tooth.

11. An aircraft wheel and brake assembly according to any preceding claim, including two sensing components (31; 61) that are offset by one-half of a period of a pattern of the target.

12. An aircraft wheel and brake assembly according to any one of claims 1 to 10, including two sensing components (31; 61) that are offset modulo an odd number of fourths of a period of a pattern of the target.

13. An aircraft wheel and brake assembly according to any preceding claim, wherein the sensing component (31; 61) is a magnetic sensor.

14. An aircraft wheel and brake assembly according to any preceding claim, wherein the sensing component (31; 61) is an optical sensor.

15. An aircraft wheel and brake assembly according to any preceding claim, wherein the sensing component (31; 61) is an ultrasound sensor.

16. An aircraft undercarriage including an aircraft wheel and brake assembly according to any preceding claim.

17. An aircraft including an aircraft undercarriage according to claim 16.
